# EUROPÄISCHE PATENTSCHRIFT

(11) **EP 0 693 699 B1**
(45) Veröffentlichungstag und Bekanntmachung des Hinweises auf die Patenterteilung: **01.12.1999**
(21) Anmeldenummer: 95110348.0
(22) Anmeldetag: 03.07.1995
(51) Int. Cl.: G02B 6/44

(54) **Abfangsvorrichtung für optische Kabel**
Anchoring device for optical cables
Dispositif de retenue pour câbles optiques

(30) Priorität: 21.07.1994 DE 4425925
(43) Veröffentlichungstag der Anmeldung: 24.01.1996
(73) Patentinhaber: RXS Kabelgarnituren Gesellschaft mit beschränkter Haftung, 58093 Hagen (DE)
(72) Erfinder: Winterhoff, Hans, Dipl.-Ing., D-58239 Schwerte (DE); Günther, Andreas, Dipl.-Ing., D-58708 Menden (DE); Müller, Thorsten, Dipl.-Ing., D-58708 Menden (DE); Zimmer, Rainer, Dipl.-Ing., D-58579 Schalksmühle (DE)
(74) Vertreter: Epping, Wilhelm, Dr.-Ing.

(56) Entgegenhaltungen:
- DE-A- 3 624 514
- DE-A- 3 726 718
- DE-C- 4 231 181

## Beschreibung

Die Erfindung betrifft eine Abfangvorrichtung mit einem Klemmelement zum Anbringen einer mechanischen Verbindung am zugfesten Zentralelement eines optischen Kabels, wobei das Klemmelement ein U-förmig gestaltetes Klemmende, eine auf das Klemmende aufschiebbare Hülse, ein Fixierende und ein das Klemmende und das Fixierende verbindendes Ausführungszwischenstück aufweist, wobei das Klemmelement an einem Halteelement gefaßt ist, das Halteelement mit Hilfe einer Klemmung am Kabelende und weiterhin an einer Befestigungsbasis fixierbar ist.

Eine Vorrichtung dieser Art ist aus der deutschen Offenlegungsschrift 37 26 718 A1 bekannt. Dort wird das Zentralelement des optischen Kabels mit relativ unhandlichen Schraubklemmen, Gewindebolzen und dergleichen gegen das Herauswandern gesichert und kontaktiert. Ein solcher Aufbau ist jedoch bei Kabeln mit vielen Hohladern sehr schwierig und zeitaufwendig zu installieren, wobei beim Hantieren mit Werkzeugen im Zentrum der Hohladern die Gefahr von Verletzungen besteht.

Aus DE 42 31 181 C1 ist eine Kabelabfangung für ein Kabel mit einem zugfesten Zentralelement bekannt. Das Zentralelement wird mit einer PUK-Schelle, die auf einer ersten Abfangungsleiste befestigt ist, festgeklemmt, während das Zentralelement in einer Bohrung einer zweiten Abfangungsleiste durch Befestigungsschrauben gehalten wird.

Weiterhin ist aus DE 36 24 514 A1 eine Vorrichtung zur zugfesten Verkappung von Kabeln bekannt. Hier handelt es sich um einen haubenförmigen Abschlußkörper mit Teilbereichen aus wärmerückstellfähigem Kunststoff, in dem eine Zugöse eingesetzt ist.

Aufgabe der Erfindung ist nun, eine Abfangvorrichtung für das zugfeste Zentralelement eines optischen Kabels zu finden, das einfach und relativ unkompliziert zwischen den Hohladern gefaßt und fixiert werden kann. Die gestellte Aufgabe wird nun mit einer Abfangvorrichtung der eingangs erläuterten Art dadurch gelöst, daß das Zwischenstück das Klemmende mit dem Fixierende direkt verbindet, daß das Zwischenstück in bezug auf die longitudinale Richtung des Kabels zur Anpassung an verschiedene Kabelstärken abgewinkelt angeordnet ist und ausgebogen werden kann, um das Klemmende auf das Zentralelement des Kabels aufzuschieben.

Mit einer Abfangvorrichtung gemäß der Erfindung wird nun das Herauswandern des Zentralelements aus einem optischen Kabel, hervorgerufen durch Temperaturschwankungen, Kabelbewegungen oder dergleichen, verhindert. Außerdem besteht die Möglichkeit, daß mit einer derartigen Vorrichtung ein metallisches Zentralelement geerdet werden kann. Damit ist also eine elektrische wie auch eine mechanische Verbindung zum Zentralelement möglich, wobei zusätzlich aufgrund der Ausformung des Klemmelementes der Kabelschirm des optischen Kabels mit erfaßt werden kann. Außerdem wird eine mechanische Verbindung des Kabelmantels mit einem metallischen oder nichtmetallischen Zentralelement zu einer Befestigungsbasis ermöglicht.

So wird nun vor der Montage der Abfangvorrichtung gemäß der Erfindung das Klemmelement am Halteelement angesetzt und eingerastet. Danach wird das Halteelement lose an der Befestigungsbasis in beliebiger Art montiert. Die Absetzkante des optischen Kabels wird dabei bis an das Ende des Halteelements gelegt. Das Halteelement wird dann mit dem optischen Kabel zusammen ausgerichtet und an der Befestigungsbasis fixiert. Das Klemmelement wird nun zwischen den Hohladern des optischen Kabels neben dem Zentralelement positioniert. Anschließend wird das Zentralelement mit einem geeigneten Werkzeug auf die vom Klemmende des Klemmelements vorgegebene Länge gekürzt. Das Klemmelement wird dann seitlich über das Zentralelement gesetzt und von vorne wird hierüber eine Hülse für eine klemmende Befestigung miteinander aufgeschoben. Das optische Kabel wird nun mit Hilfe eines Kabelbinders oder einer Schlauchschelle am Halteelement festgelegt. Zur Kontaktierung des Kabelschirms ist jedoch die Befestigung mittels einer Schlauchschelle besser geeignet als mit einem Kunststoffkabelbinder.

Der Vorteil dieser Abfangvorrichtung gemäß der Erfindung ist nun besonders darin zu sehen, daß das Klemmelement sehr schmal ist und gut von außen zwischen die Hohladern bzw. Adern des Kabels einzufügen ist. Auch die Hülse zur klemmenden Befestigung und Kontaktierung des Zentralelements des Kabels fügt sich als runder Körper gut zwischen die Hohladern bzw. Adern ein. Außerdem wird kein Werkzeug für die Befestigung des Zentralelementes zwischen den Hohladern hindurchgeführt, so daß keine Verletzungsgefahr gegeben ist.

Die Erfindung wird nun anhand von sieben Figuren näher erläutert.
- Figur 1: zeigt die fertigmontierte Abfangvorrichtung gemäß der Erfindung.
- Figur 2: zeigt das Klemmelement der Abfangvorrichtung in einer Seitenansicht.
- Figur 3: zeigt das Klemmelement in einer Frontansicht.
- Figur 4: zeigt das Klemmelement in einer Draufsicht.
- Figur 5: zeigt das Halteelement der Abfangvorrichtung.
- Figur 6: zeigt das Halteelement in seitlicher Ansicht.
- Figur 7: zeigt das Halteelement in einer Draufsicht.

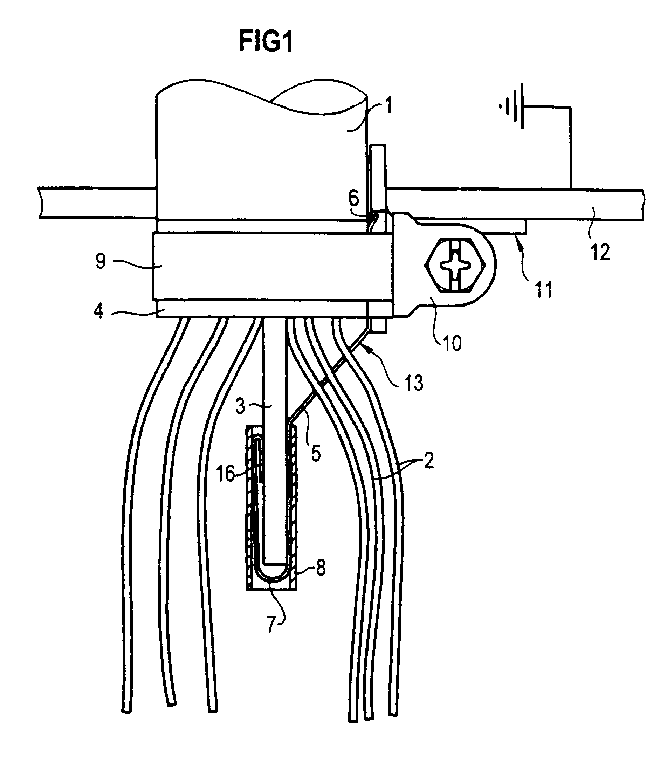

In Figur 1 wird ein optisches Kabel 1 gezeigt, das mit einer Abfangvorrichtung gemäß der Erfindung abgefangen wird. Daraus ist erkennbar, daß das Zentralelement 3 des optischen Kabels 1 in das Klemmende 7 eines Klemmelements 13 klemmend eingeführt ist. Das obere Ende 16 des Klemmendes ist nochmals nach einwärts umgebogen, um die Einführung zu verbessern. Über das Klemmende 7 ist die Klemmhülse 8 aufgeschoben, wodurch die Verklemmung zum Zentralelement 3 erfolgt. Über ein Ausführungszwischenstück 5 wird das Klemmende 7 aus dem Zentrum des Kabels nach außen geführt und mit seinem Fixierende 6 am Halteelement 11 fixiert. Das Halteelement 11 wird nun über eine Kabel schelle 9 auf dem abgesetzten Kabelende 4 mittels eines Spannschlosses fixiert. Die Festlegung des Halteelements 11 an einer Befestigungsbasis 12 kann beispielsweise mittels Schrauben oder Klemmung erfolgen. Wenn die Befestigungsbasis aus leitendem Material besteht, kann gleichzeitig Erdpotential angeschlossen werden.

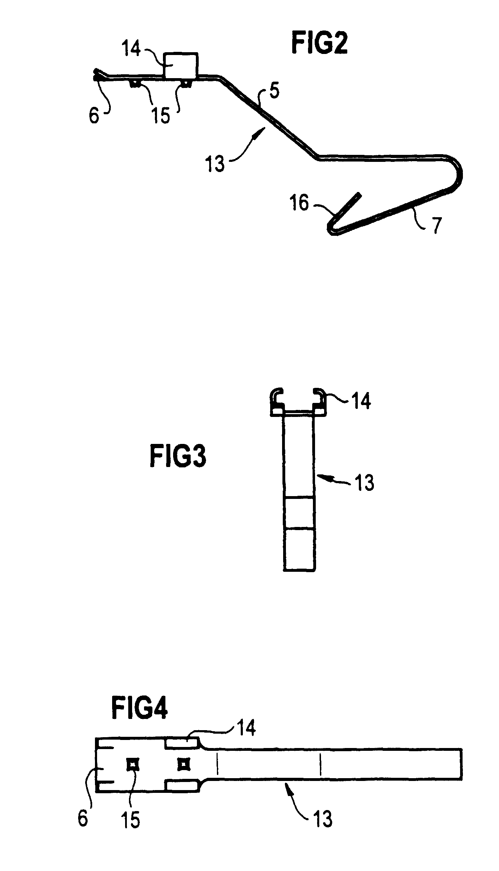

Die Figur 2 zeigt das Klemmelement 13, das aus dem Klemmende 7 mit seiner endseitigen Einbiegung 16, dem Ausführungszwischenstück 5 und dem Fixierende 6 besteht. Das Klemmende 7 ist U-förmig gebogen, zunächst winkelig geöffnet und wird mit Hilfe der überzuschiebenden Hülse klemmend auf das Zentralelement des Kabels aufgeschoben. Durch die Einbiegung 16 ist eine Anpassung an verschiedene Zentralelement-Durchmesser gewährleistet, wobei nach dem Aufschieben der Hülse 8 eine kraftschlüssige Verbindung zwischen Klemmelement 13 und Zentralelement besteht. Das winkelig angesetzte Ausführungszwischenstück 5 dient der Ausführung des Klemmendes aus dem Zentrum des Kabels zum Außenbereich hin und kann entsprechend der Stärke des Kabels mehr oder weniger ausgebogen und damit angepaßt werden. Das Fixierende 6 ist mit Rastnasen ausgebildet, die eine rastende Verbindung zum Halteelement sicherstellen. Außerdem ist das Fixierende 6 mit Kontaktkrallen 15 versehen, die in den Kabelschirm des Kabels eingreifen und somit eine sichere Kontaktierung wie auch eine erhöhte Griffigkeit sicherstellen. In eine U-förmige Führung 14 am Fixierende 6 wird das Halteelement eingeschoben und verdrehungssicher gehalten. Durch das Einrasten der Fixierenden 6 ist ein Abrutschen bei auftretenden Zugkräften nicht mehr möglich.

Die Figur 3 zeigt das Klemmelement 13 in einer Frontansicht, wobei besonders die Ausbildung der Führung 14 in Erscheinung tritt. Diese ist oben nach einwärts eingebogen, so daß das Halteelement gesichert ist.

In Figur4 wird das Klemmelement 13 in einer Draufsicht gezeigt, wobei hier die seitliche Anordnung der Rastnasen am Fixierende 6 deutlich wird. Außerdem sind die Kontaktkrallen bzw. Durchrisse 15 und die Führung 14 für das Halteelement sichtbar.

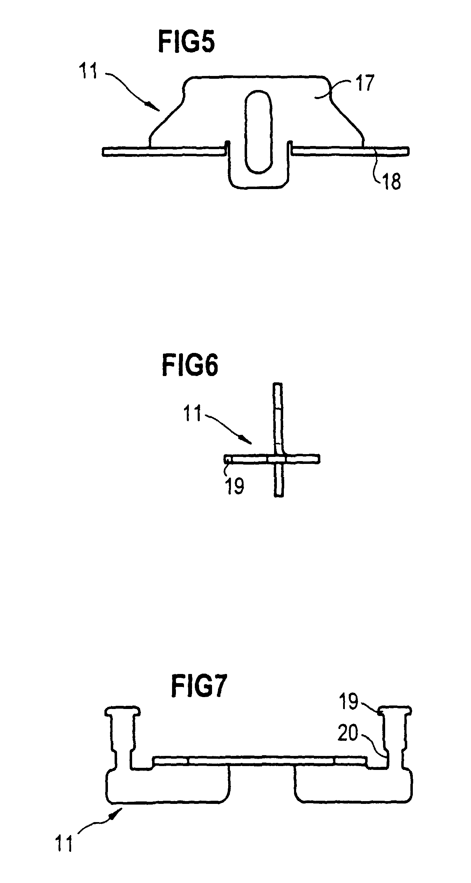

Die Figur 5 zeigt das Halteelement 11, das aus der Anlagefläche 17 und der Befestigungsfläche 18 für das Klemmelement 13 besteht.

Mittels der Anlagefläche 17 wird das Halteelement 11 an einer Befestigungsbasis 12 befestigt, so daß über diese Verbindung auftretende Kräfte und Momente abgefangen werden können.

Figur 6 zeigt die Seitenansicht des Halteelements 11, wobei hier die Befestigungsfläche 18 gut zu sehen ist, auf die das Halteelement 11 aufgeschoben wird und an der das abgesetzte Kabel 1 dann so angelegt wird, daß es mit der Absetzkante am Endanschlag 19 der Befestigungsfläche 18 zu liegen kommt und mit einem Kabelbinder oder einer Schlauchschelle befestigt wird. Daraufhin wird das Zentralelement in das Klemmende des Halteelements eingeführt und mit der Hülse fixiert.

Die Fgur 7 zeigt die Draufsicht des Halteelementes 11, wobei insbesondere hier die Einführungsstelle 20 für die U-förmige Führung 14 des Klemmelementes zu sehen ist. Das Klemmelement wird mit der U-förmigen Führung 14 an der Einführungsstelle 20 auf die Befestigungsfläche 18 aufgesetzt und dann in Richtung des Endanschlags 19 verschoben, so daß bei Anliegen der U-förmigen Führung 14 des Klemmelements 13 an den Endanschlägen 19 des Halteelements 11 die Fixierenden 6 durch Federwirkung nach oben rasten und somit eine sichere Fixierung des Klemmelements 13 auf dem Halteelement 11 gewährleisten.

## Patentansprüche

1. Abfangvorrichtung mit einem Klemmelement (13) zum Anbringen einer mechanischen Verbindung am zugfesten Zentralelement (3) eines optischen Kabels (1), wobei das Klemmelement (13) ein U-förmig gestaltetes Klemmende (7), eine auf das Klemmende (7) aufschiebbare Hülse (8), ein Fixierende (6) und ein das Klemmende (7) und das Fixierende (6) verbindendes Ausführungszwischenstück (5) aufweist, wobei das Klemmelement (13) an einem Halteelement (11) gefaßt ist, das Halteelement (11) mit Hilfe einer Klemmung (9-10) am Kabelende (4) und weiterhin an einer Befestigungsbasis (12) fixierbar ist,
**dadurch gekennzeichnet**,
daß das Zwischenstück (5) das Klemmende (7) mit dem Fixierende (6) direkt verbindet und daß das Zwischenstück (5) in bezug auf die longitudinale Richtung des Kabels zur Anpassung an verschiedene Kabelstärken abgewinkelt angeordnet ist und ausgebogen werden kann, um das Klemmende (7) auf das Zentralelement (3) des Kabels aufzuschieben.

2. Abfangvorrichtung nach Anspruch 1,
**dadurch gekennzeichnet**,
daß das Fixierende (6) am Halteelement (11) einrastbar ist.

3. Abfangvorrichtung nach einem der vorhergehenden Ansprüche,
**dadurch gekennzeichnet**,
daß das Klemmende (7) einen nach einwärts gebogenen Abschluß bzw. eine Einbiegung (16) aufweist.

4. Abfangvorrichtung nach einem der vorhergehenden Ansprüche,
**dadurch gekennzeichnet**,
daß das Fixierende (6) zusätzlich eine U-förmige Führung (14) für das Halteelement (11) aufweist.

5. Abfangvorrichtung nach einem der vorhergehenden Ansprüche,
**dadurch gekennzeichnet**,
daß das Fixierende (6) zum freigelegten Kabelschirm des Kabelendes (4) gerichtete Kontaktkrallen (15) aufweist.

6. Abfangvorrichtung nach einem der vorhergehenden Ansprüche,
**dadurch gekennzeichnet**,
daß die Klemmung (9-10) aus einem Spannband (9) und einem Spannschloß (10) besteht.

7. Abfangvorrichtung nach einem der vorhergehenden Ansprüche,
**dadurch gekennzeichnet**,
daß das Halteelement (11) mittels Schraubelementen an der Befestigungsbasis (12) angeordnet ist.

8. Abfangvorrichtung nach einem der vorhergehenden Ansprüche,
**dadurch gekennzeichnet**,
daß das Halteelement (11) einen Erdungsanschluß aufweist.

## Claims

1. Supporting device having a clamping element (13) for fitting a mechanical joint on a tension-proof central element (3) of an optical cable (1), the clamping element (13) having a clamping end (7) of U-shaped configuration, a sleeve (8) which can be pushed onto the clamping end (7), a fixing end (6) and a lead-out adapter (5) connecting the clamping end (7) and the fixing end (6), the clamping element (13) being mounted on a holding element (11) and it being possible for the holding element (11) to be fixed on the cable end (4) and, furthermore, on a fastening base (12) with the aid of a clamp (9-10), characterized in that the adapter (5) directly connects the clamping end (7) to the fixing end (6), and in that the adapter (5) is arranged angled away with reference to the longitudinal direction of the cable for the purpose of adaptation to different cable thicknesses and can be bent out in order to push the clamping end (7) onto the central element (3) of the cable.

2. Supporting device according to Claim 1, characterized in that the fixing end (6) can be latched tight on the holding element (11).

3. Supporting device according to one of the preceding claims, characterized in that the clamping end (7) has an inwardly bent termination and/or a bent-in part (16).

4. Supporting device according to one of the preceding claims, characterized in that the fixing end (6) additionally has a U-shaped guide (14) for the holding element (11).

5. Supporting device according to one of the preceding claims, characterized in that the fixing end (6) has contact claws (15) directed towards the exposed cable shield of the cable end (4).

6. Supporting device according to one of the preceding claims, characterized in that the clamp (9-10) comprises a clamping band (9) and a turnbuckle (10).

7. Supporting device according to one of the preceding claims, characterized in that the holding element (11) is arranged on the fastening base (12) by means of screwing elements.

8. Supporting device according to one of the preceding claims, characterized in that the holding element (11) has an earth connection.

## Revendications

1. Dispositif de retenue pour câbles optiques, comportant un élément (13) de serrage pour établir une liaison mécanique sur l'élément (3) central, résistant à la traction, d'un câble (1) optique, l'élément (13) de serrage comportant une extrémité (7) de serrage réalisée en forme de U, un manchon (8) pouvant être enfilé sur l'extrémité (7) de serrage, une extrémité (6) d'immobilisation et une pièce (5) intermédiaire de sortie reliant l'extrémité (7) de serrage et l'extrémité (6) d'immobilisation, l'élément (13) de serrage étant monté sur un élément (11) de retenue, l'élément (11) de retenue pouvant être immobilisé à l'aide d'un moyen (9-10) de serrage sur l'extrémité (4) du câble, ainsi que sur une base (12) de fixation,
caractérisé en ce que la pièce (5) intermédiaire relie directement l'extrémité (7) de serrage à l'extrémité (6) d'immobilisation, et en ce que la pièce (5) intermédiaire est disposée en oblique, par rapport à la direction longitudinale du câble, en adaptation à différentes épaisseurs de câbles, et peut être coudée afin d'enfiler l'extrémité (7) de serrage sur l'élément (3) central du câble.

2. Dispositif de retenue suivant la revendication 1, caractérisé en ce que l'extrémité (6) d'immobilisation peut être encliquetée sur l'élément (11) de retenue.

3. Dispositif de retenue suivant l'une des revendications précédentes, caractérisé en ce que l'extrémité (7) de serrage comporte une terminaison recourbée vers l'intérieur ou encore un repliement (16) rentrant.

4. Dispositif de retenue suivant l'une des revendications précédentes, caractérisé en ce que l'extrémité (6) d'immobilisation comporte en plus un guidage (14) en forme de U pour l'élément (11) de retenue.

5. Dispositif de retenue suivant l'une des revendications précédentes, caractérisé en ce que l'extrémité (6) d'immobilisation comporte des griffes (15) de contact dirigées vers la gaine de câble dénudée de l'extrémité (4) du câble.

6. Dispositif de retenue suivant l'une des revendications précédentes, caractérisé en ce que le moyen (9-10) de serrage est constitué d'un collier (9) de serrage et d'un tendeur (10).

7. Dispositif de retenue suivant l'une des revendications précédentes, caractérisé en ce que l'élément (11) de retenue est disposé sur la base (12) de fixation au moyen d'éléments vissés.

8. Dispositif de retenue suivant l'une des revendications précédentes, caractérisé en ce que l'élément (11) de retenue comporte uneconnexion de mise à la terre.
